# EUROPÄISCHE PATENTSCHRIFT

(11) **EP 0 531 729 B1**
(45) Veröffentlichungstag und Bekanntmachung des Hinweises auf die Patenterteilung: **20.03.1996**
(21) Anmeldenummer: 92113639.6
(22) Anmeldetag: 11.08.1992
(51) Int. Cl.: A62B 27/00

(54) **Vorrichtung zum Betreiben und Prüfen von Atemschutzgeräten**
Device for operating and testing breathing apparatus
Dispositif pour opérer et tester des appareils respiratoires

(30) Priorität: 07.09.1991 DE 4129848
(43) Veröffentlichungstag der Anmeldung: 17.03.1993
(73) Patentinhaber: Drägerwerk Aktiengesellschaft, D-23542 Lübeck (DE)
(72) Erfinder: Kröger, Rainer, W-2401 Krummesse (DE); Dramenski, Ralf, W-2200 Elmshorn (DE)

(56) Entgegenhaltungen:
- WO-A-88/08526
- DE-A- 3 016 684
- DE-A- 3 427 182
- DE-B- 1 232 474

## Beschreibung

Die Erfindung betrifft eine Vorrichtung gemäß dem Oberbegriff von Anspruch 1.

Eine derartige Vorrichtung ist aus der DE-OS 30 16 684 oder der WO-A-8808526 bekanntgeworden. Die bekannte Vorrichtung erzeugt über einen pneumatischen Teil Gasströmungen unter vorgebbaren Druck- und Strömungswerten, wie sie unter normaler, sowie unter erhöhter Belastung eines Geräteträgers auftreten können. Die auf diese Weise erzeugten Betriebsparameter der Prüfvorrichtung werden auf ein Kopfteil übertragen, welches einen Prüfanschluß besitzt, über den das zu überprüfende Gerät mit dem gelieferten Druck bzw. Volumen an Antriebsgas betrieben wird. Durch die Simulation der Betriebsparameter ist es möglich, die Funktionstüchtigkeit eines Beatmungsgerätes oder eines Atemschutzgerätes oder auch einer einfachen Atemhilfe zu prüfen oder auch zu überwachen. Auch zur Entwicklung von neuen Atemschutzgeräten ist eine solche Vorrichtung einsetzbar, um die Auswirkungen von neuen Bauteilen oder vollständig neuen Geräteserien auf den später zu erwartenden Betriebsfall zu testen. Die ermittelten Testergebnisse können von entsprechenden Meßstellen im Kopfteil oder auch im zu überprüfenden Gerät selbst erfaßt und dokumentiert werden.

Mit zunehmender Verfeinerung der pneumatischen Regel- und Steuereinheiten an Atemschutzgeräten und infolge der zunehmenden Erfordernisse in bezug auf kleines Bauvolumen der Geräte und sparsamen Verbrauch von mitzuführendem Atemgas ist darauf zu achten, daß während des Betriebs von Atemschutzgeräten möglichst wenig Atemgas nutzlos verlorengeht. Demzufolge sind beispielsweise druckempfindliche Steuerteile leichter ansprechbar auf den Atemwegsdruck, so daß in zunehmendem Maße geringe Drücke und kleine Atemströmungen (Flow) während der Überprüfung gemessen werden müssen, wobei erlaubte Abweichungen vom Sollwert immer geringer werden. Die das Meßergebnis verfälschenden Störgrößen müssen weiter reduziert werden, so daß insbesondere Totraumvolumina, die mit kompressiblem Gas gefüllt sind, zu vermeiden und die Strömungsverhältnisse für das Atemgas so zu gestalten sind, daß sie keine nachteiligen Auswirkungen auf die Druckverhältnisse in den atemgasführenden Leitungen ausüben.

Der vorliegenden Erfindung liegt somit die Aufgabe zugrunde, eine Vorrichtung der genannten Art so zu verbessern, daß eine genauere Überprüfung und empfindlichere Messung der Betriebsparameter von Atemschutzgeräten besonders bei kleinen Gasströmungen (Flow) und geringen Betriebsdrücken in den atemgasführenden Leitungen möglich ist.

Die Lösung der Aufgabe erfolgt dadurch, daß an dem Prüfanschluß in naher Strömungsnachbarschaft zu der den Atemanschluß aufnehmenden Öffnung des Kopfteils ein die Strömungsverbindung zwischen Prüfeinheit und zu prüfender Atemhilfe unterbrechendes Ventil angeordnet ist.

Der Vorteil der Erfindung liegt im wesentlichen darin, daß im Strömungswege zwischen dem zu überprüfenden oder betreibenden Atemschutzgerät und der das Betreiben bzw. Überprüfen ermöglichenden Prüfeinheit die Prüfvolumina diesseits und jenseits des Ventils voneinander abgetrennt werden, so daß z.B. bei Dichtigkeitsprüfungen des Atemschutzgerätes das kompressible Volumen jenseits des Ventils in Richtung der Prüfeinheit keinen Einfluß auf die Druckeigenschaften und Dichtigkeiten bzw. zu überwachenden Leckagen im Atemschutzgerät hat. Somit kann beispielsweise durch die Prüfeinheit ein bestimmtes Volumen unter vorgebbarem Druck in das Atemschutzgerät befördert werden, um einen Ausatemhub des Geräteträgers zu simulieren, wonach das Ventil geschlossen wird, so daß das Atemschutzgerät von der Prüfeinheit entkoppelt ist, und eventuell auftretende Leckagen oder das Aufrechterhalten des im Atemschutzgerät erzeugten Überdruckes durch entsprechende Druckmessung im Leitungswege zwischen Atemanschluß und Atemschutzgerät überwacht werden kann. Somit sind auch geringe Leckagen überprüfbar, die sonst ohne das Ventil in dem kompressiblen, nicht unerheblichen Gasvolumen der Prüfeinheit verlorgengegangen wären. Auch durch die Dehnbarkeit des insgesamt angeschlossenen Materials der Prüfeinheit würden kleine Druckabfälle angezeigt werden, die nicht eindeutig einer Leckage zugeordnet werden könnten, weil neben der Kompressibilität der Gasfüllung auch die Nachgiebigkeit von unterschiedlichen verwendeten Materialien während der Druckhaltephase eine Leckage vortäuschen würden. In diesem Zusammenhang ist besonders derjenige Bauteil der Prüfeinheit in Betracht zu ziehen, welcher die Lunge nachbildet. Hierzu wird in der Regel ein mehrere Liter enthaltender Faltenbalg verwendet, welcher über eine Antriebseinheit bewegbar ist. Eine solche Prüfeinheit, welche sowohl aktiv als auch passiv Atemzughübe simuliert bzw. registriert, ist in der DE-OS 34 27 182 beschrieben. Die dort dargestellte und erläuterte Prüfeinheit kann als Beispiel angesehen werden, um an die erfindungsgemäße Vorrichtung angeschlossen zu werden.

Die Ventilanordnung wird zweckmäßigerweise so gestaltet, daß die den Atemanschluß aufnehmende Öffnung des Kopfteils zu dem rohrförmigen, an seinem Rohrende einen Dichtsitz für die Ventilklappe bildenden Prüfanschluß über einen Luftleitkanal in Verbindung steht. Der Kanal ist von der Öffnung ausgehend ringförmig um den Dichtsitz gelegt. Dadurch ist sichergestellt, daß bei geschlossenem Ventil ein geringstmögliches Totraumvolumen über dem Ventilteller entsteht, und daß bei geöffnetem Ventil ein möglichst den ganzen Umfang des Ventilsitzes umfassender Strömungskanal geöffnet wird, um ein möglichst ungehindertes Durchströmen des Prüfanschlusses zu ermöglichen.

Die Ventilplatte wird zweckmäßigerweise über eine Schließvorrichtung betätigt. Diese kann im einfachsten Fall aus einem von Hand betätigten Hebel bestehen, der über einen Stößel den Ventilteller axialbeweglich auf den Ventilsitz legen kann.

Eine automatische Betätigung des Ventils wird durch den Einsatz einer Kolben-Zylinder-Einheit als Schließvorrichtung möglich, an deren Kolbenstößel der Ventilteller axialbeweglich über dem Ventilsitz angebracht ist, so daß sich kurze Schließ- und Öffnungswege verwirklichen lassen. Die Kolbenzylindereinheit wird über einen pneumatischen Anschluß mit Druckluft versorgt, wobei der Kolben in Öffnungsrichtung des Ventils durch eine Feder vorgespannt ist, und zum Schließen des Ventils in der Druckkammer hinter der Zylinderscheibe ein Überdruck von etwa 4 bar erzeugt wird. Zur Verbesserung der Strömungseigenschaften ist es günstig, den Anschluß radial zum Prüfanschluß in Höhe des Ventilsitzes anzuordnen, wodurch bei geschlossenem Ventil der Totraum weiter verringert wird.

Da auch der dichte Sitz des Atemanschlusses an die erfindungsgemäße Vorrichtung von Bedeutung ist, und da als Atemanschluß auch Vollmasken bzw. Halbmasken gelten, ist der Kopfteil zumindest in dem Bereich der Atemöffnungen aus einer steif nachgiebigen, elastischen Hülle zu bilden. Dadurch kann bei einer Vollmaske oder Halbmaske als Atemanschluß die Bänderung soweit straff angezogen werden, daß eine plastische Anpassung der Maskenkontur an die Oberfläche des Kopfteils verwirklicht ist, so daß eine größtmögliche Dichtheit im Randbereich der Schutzmaske verwirklichbar ist.

Um den im Atemanschluß vorherrschenden Druck messen und registrieren zu können, ist es erforderlich, einen Druckmeßanschluß anzubringen. Der Anbringungsort ist zweckmäßigerweise an einem Hohlring vorzusehen, der die den Atemanschluß aufnehmende Atemöffnung umgreift und der mit mehreren Bohrungen in Druckverbindung zur Atemöffnung steht. Der Druckmeßanschluß ist über eine Schlauchleitung mit einem Drucksensor außerhalb der Prüfvorrichtung verbunden. Die Bohrungen im Atemanschluß sollen sich zur Vermeidung von Verwirbelungen nicht mit der Öffnung für den Druckmeßanschluß überdecken. Der Druckmeßanschluß dient dazu, während der Atemzugssimulation den Öffnungsdruck eines angschlossenen Lungenautomaten zu prüfen.

Ein weiterer Meßanschluß kann in Höhe des Augen-Nasen-Bereichs des Kopfteils vorgesehen sein. Er dient dazu, bei aufgesetzter Atemschutzmaske den Maskeninnenraumdruck zu messen, wenn die Dichtfunktion der Maske überprüft werden soll. Dabei kann der Meßanschluß gleichzeitig dazu dienen, den Maskeninnenraum unter Unterdruck (10 mbar) zu setzen, wenn er in Form eines Schlauchanschlusses ausgebildet ist, der lediglich den Druck pneumatisch zu einem nachgeschalteten Drucksensor zu übertragen braucht. Alternativ kann der Meßanschluß sowohl am Atemanschluß als auch im Augen-Nasen-Bereich des Kopfteils den Drucksensor enthalten, so daß dann evtl. notwendige elektrische Sensorleitungen aus den Anschlüssen herausgeführt werden müssen.

Ein Ausführungsbeispiel der Erfindung wird schematisch dargestellt und im folgenden näher erläutert.

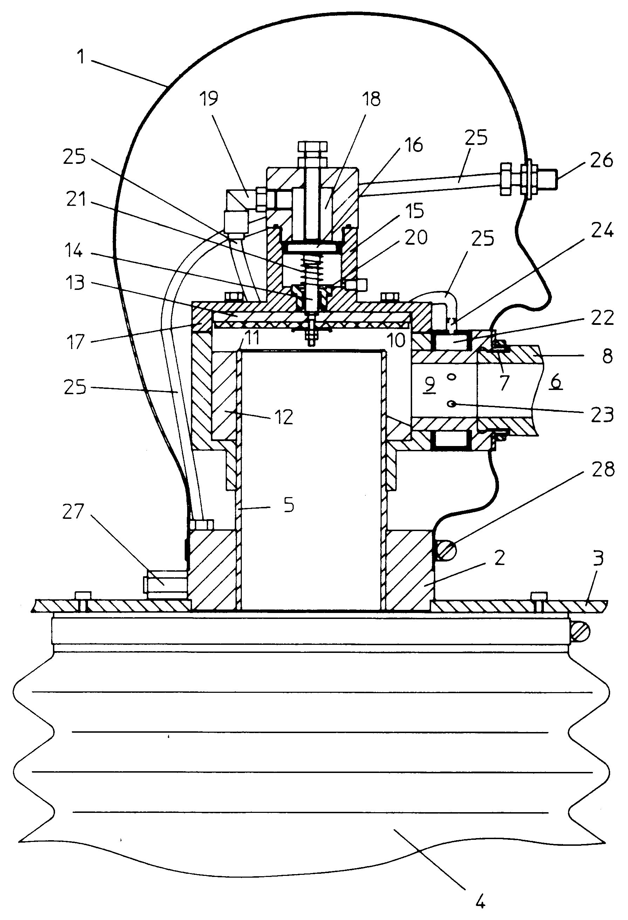

In der einzigen Figur ist ein Kopfteil (1) in Form einer fest elastischen Hülle dargestellt, welches über einen Befestigungsblock (2) an eine Grundplatte (3) einer Prüfeinheit (4) angeschellt (28) ist. Die Prüfeinheit (4) ist lediglich symbolhaft durch einen Gummifaltenbalg dargestellt, wie er beispielsweise in der DE-OS 34 27 182 gezeigt und in Verbindung mit einer vollständigen Prüfeinheit beschrieben ist. Auf der Grundplatte (3) ist in dem Befestigungsblock (2) ein Prüfanschluß (5) in Form eines Rohres aufgenommen, welches einerseits zu der Prüfeinheit (4) und andererseits zu einem Atemanschluß (6) in Strömungsverbindung steht. Der Atemanschluß (6) ist symbolhaft als ein Gewindeeinsatz (7) mit aufgestülptem Atemschlauch (8) gezeichnet und steht für ein nicht dargestelltes, vollständiges druckluftbetriebenes Atemschutzgerät, welches in tatsächlichem Gebrauch über eine Vollmaske an dem Kopf des Geräteträgers befestigt ist. Eine Öffnung (9) nimmt den Atemanschluß (6) auf und repräsentiert den Mund eines Geräteträgers. Die Öffnung (9) setzt sich in einem Luftleitkanal (10) fort, welcher das als Dichtkrater (11) ausgebildete Ende des Prüfanschlusses (5) ringförmig umgibt. Der Luftleitkanal (10) wird gebildet aus den Ausnehmungen einer um den Prüfanschluß (5) gelegten Hülse (12). Der Dichtkrater (11) ist über eine Ventilscheibe (13) verschließbar, welche an einem Kolbenstößel (14) befestigt ist, welcher Teil eines in einem Zylinder (15) axial verschieblichen Kolbens (16) ist. Der Zylinder (15) ist mit dem Anschlußdeckel (17) zu einer Einheit verbunden und weist einen Druckraum (18) auf, der über einen Druckluftanschluß (19) mit einer nicht dargestellten Druckgasquelle verbunden werden kann. Zwischen dem Kolben (16) und der Führung (20) für den Kolbenstößel (14) ist eine Druckfeder (21) eingespannt, die den Ventilteller (13) in Öffnungsrichtung vorspannt. Um den Druck in der Öffnung (9) bzw. dem Atemanschluß (6) zu messen, ist um die Öffnung (9) ein Ringkanal (22) gelegt, dessen Innenraum mit der Öffnung (9) über mehrere Bohrungen (23) verbunden ist. Ein Druckmeßanschluß (24) am Ringkanal (22) ist zur Messung des Druckes im Atemanschluß (6) vorgesehen, der über eine Tülle (25) an einen nicht dargestellten Drucksensor angeschlossen werden kann. Ebenfalls ist ein Meßanschluß (26) für eine Druckmessung innerhalb einer nicht dargestellten, auf den Kopfteil (1) aufgezogenen Atemschutzvollmaske im Augen-Nasen-Bereich des Kopfteils (1) angebracht. Sowohl der Druckluftanschluß (19) als auch der Druckanschluß (24) und der Meßanschluß (26) sind über Tüllen (25) aus dem Innenbereich des Kopfteils (1) zu einem Schlauchanschluß (27) herausgeführt, wo sie entweder an eine Druckluftquelle oder wechselweise bzw. gleichzeitig an einen Drucksensor angeschlossen werden können. Weder die Druckluftquelle noch der Drucksensor sind dargestellt.

Zur Durchführung einer Prüfung wird beispielsweise die Prüfeinheit (4) bei geöffnetem Ventilteller (13) betätigt, so daß das sich verringernde Volumen des Faltenbalgs (4) bei angeschlossenem Atemschutzgerät einen Überdruck sowohl im Prüfanschluß (5) als auch in dem Luftleitkanal (10) sowie in dem Atemanschluß (6) erzeugt, sofern dafür gesorgt ist, daß im Atemschutzgerät die zur Steuerung des Atemgases erforderlichen Ventile geschlossen sind. Zur Überprüfung der Dichtheit des angeschlossenen Atemschutzgerätes wird nach Herstellung des erforderlichen Überdrucks durch entsprechende Signalabgabe aus der Prüfeinheit (4) an den Druckluftanschluß (19) das Ventil (11, 13) geschlossen und der Druckverlauf im Atemanschluß über den Druckmeßanschluß (24) und die Tülle (25) mit Hilfe des nicht dargestellten Drucksensors gemessen. Ändert sich der gemessene Druck innerhalb einer vorgegebenen Zeitspanne nicht über ein vorgeschriebenes Maß hinaus, kann das angeschlossene Atemschutzgerät als dicht angesehen werden. Dadurch, daß während der Dichtprüfung das Ventil (11, 13) geschlossen ist, ist das gesamte vom Prüfanschluß (5) und der Prüfeinheit (4) eingeschlossene Prüfvolumen von der Dichtprüfung ausgeschlossen. Dadurch wird das mit kompressiblem Gas gefüllte Prüfvolumen erheblich verringert, und die Prüfaussage kann sich auf den Prüfling alleine beschränken.

In einem weiteren, nicht dargestellten Fall kann als Atemanschluß eine Vollmaske angesehen werden, die über die Kontur des Kopfteils (1) gezogen wird, so daß der Nasen- und Mundbereich des Kopfteils (1) abgedeckt werden und durch strammes Anziehen der Bebänderung ein dichtes Anliegen des Maskendichtrandes sichergestellt ist. Die Prüfung der Dichtfunktion des Maskenrandes erfolgt dadurch, daß über den Meßanschluß (26) durch die angeschlossene Tülle (25) die Innenluft aus dem Maskeninnenraum soweit abgezogen wird, daß sich ein Unterdruck von etwa 10 mbar einstellt. Der gleichzeitig im Leitungsweg der fortgesetzten Tülle (25) angeschlossene (nicht dargestellte) Drucksensor überwacht während etwa 60 sec das Maß einer evtl. Abweichung von den anfangs eingestellten 10 mbar Unterdruck. Steigt dieser nicht über einen vorgebbaren Grenzwert, ist die Maskenauflage auf dem Kopfteil (1) als dicht anzusehen.

## Patentansprüche

1. Vorrichtung zum Betreiben und Überprüfen von druckluftbetriebenen, die Atmung unterstützenden oder ermöglichenden Atemhilfen, wie Atemschuzgeräte, mit einem die Atemöffnungen des Geräteträgers nachbildenden Kopfteil, welches eine Öffnung (9) aufweist, an der ein Atemanschluß (6) der Atemhilfe gegenüber der Umgebung dichtend anschließar ist, wobei das Kopfteil (1) einen Prüfanschluß (5) aufweist, der in Strömungsverbindung zwischen einer hinsichtlich Druckerzeugung und Volumenveränderrung aktiv steuerbaren und passiv veränderbaren Prüfeinheit steht (4) und der Öffnung (9), dadurch gekennzeichnet, daß an dem Prüfanschluß (5) in naher Strömungsnachbarschaft zu der den Atemanschluß (6) aufnehmenden Öffnung (9) des Kopfteils (1) ein die Strömungsverbindung zwischen Prüfeinheit (4) und zu prüfender Atemhilfe unterbrechendes Ventil (11, 13) angeordnet ist.

2. Vorrichtung nach Anspruch 1, dadurch gekennzeichnet, daß die den Atemanschluß (6) aufnehmende Öffnung (9) des Kopfteils (1) zu dem rohrförmigen, an seinem Rohrende einen Dichtsitz (11) für die Ventilklappe (13) bildenden Prüfanschluß (5) über einen Luftleitkanal (10) in Verbindung steht, der von der Öffnung (9) ausgehend ringförmig um den Dichtsitz (11) gelegt ist, wodurch unter Bildung eines geringen Strömungsvolumens ein größtmöglicher Öffnungsquerschnitt für das Ventil (11, 13) ermöglicht ist.

3. Vorrichtung nach einem der Ansprüche 1 oder 2, dadurch gekennzeichnet, daß der rohrförmige Prüfanschluß (5) einen über dem Ventilsitz (11) angeordneten Ventilteller (13) aufweist, der eine Schließvorrichtung (15, 16) trägt, an welche über einen Stößel (14) der Ventilteller (13) axialbeweglich über dem Ventilsitz (11) angebracht ist, und daß die Öffnung (9) radial zum rohrförmigen Prüfanschluß (5) in Höhe des Ventilsitzes (11) angeordnet ist und so bei geschlossenem Ventil (11, 13) einen minimalen Totraum bildet.

4. Vorrichtung nach Anspruch 3, dadurch gekennzeichnet, daß die Schließvorrichtung eine pneumatisch betätigbare Kolben-Zylinder-Einheit (15, 16), und der Kolbenstößel (14) an dem Ventilteller (13) befestigt ist.

5. Vorrichtung nach einem der Ansprüche 1 bis 4, dadurch gekennzeichnet, daß der Kopfteil (1) zumindest in dem Bereich der Atemöffnungen (9) aus einer steif nachgiebigen, elastischen Hülle gebildet ist.

6. Vorrichtung nach einem der Ansprüche 1 bis 5, dadurch gekennzeichnet, daß ein Drucksensor an einen den Umfang der den Atemanschluß (6) aufnehmenden Öffnung (9) umgreifenden Hohlring (22) angeschlossen ist, der über mindestens eine Bohrung (23) in Druckverbindung zu der Atemöffnung (9) steht, welche in zum Drucksensor entfernter Position angebracht sind.

7. Vorrichtung nach einem der Ansprüche 1 bis 6, dadurch gekennzeichnet, daß ein Drucksensor an einem Meßanschluß (26) angeschlossen ist, der in Höhe des Augen-Nasen-Bereichs aus dem Kopfteil (1) herausragt und mit der Umgebung in pneumatischer Druckverbindung steht.

## Claims

1. A device for operating and testing compressed air-operated respiratory aids which support or facilitate breathing, such as respiratory protection apparatus, comprising a head element which simulates the respiratory openings of the device wearer and comprises an aperture (9), to which a respiratory connection (6) of the respiratory aid can be connected in a sealing tight manner relative to the environment, the head element (1) comprising a test connector (5) which lies in the flow connection between a test unit (4), which can be actively controlled and passively altered in respect of pressure generation and volume changes, and the aperture (9), characterised in that a valve (11, 13), which interrupts the flow connection between the test unit (4) and the respiratory aid which is to be tested, is arranged on the test connector (5) in the close vicinity of the flow to the aperture (9) receiving the respiratory connection (6).

2. A device according to claim 1, characterised in that the aperture (9) of the head element (1) receiving the respiratory connection (6) is connected to the tubular test connector (5), which forms a sealing seat (11) at its tube end for the valve flap (13), via an air conveying duct (10), which extends from the aperture (9) annularly around the sealing seat (11), the small flow volume allowing for the creation of a maximum cross sectional opening for the valve (11, 13).

3. A device according to one of claims 1 or 2, characterised in that the tubular test connector (5) comprises a valve disk (13), which is arranged above the valve seat (11) and supports a closing device (15, 16) to which the valve disk (13) is fitted via a pushrod (14) so as to be axially displaceable above the valve seat (11), and the aperture (9) is arranged radially to the tubular test connector (5) at the level of the valve seat (11), so that it forms a minimal dead space when the valve (11, 13) is closed.

4. A device according to claim 3, characterised in that the closing device is constructed as a pneumatically actuated piston-cylinder unit (15, 16), and the piston rod (14) is secured to the valve disk (13).

5. A device according to one of claims 1 to 4, characterised in that the head element (1) is constructed as a semi-rigid, elastic case at least in the region of the respiratory openings (9).

6. A device according to one of claims 1 to 5, characterised in that a pressure sensor is connected to a hollow ring (22), which encloses the circumference of the aperture (9) receiving the respiratory connection (6) and is in pressure connection via at least one bore (23) with the respiratory aperture (9), which is fitted in a position remote from the pressure sensor.

7. A device according to one of claims 1 to 6, characterised in that a pressure sensor is connected to a measuring connector (26), which projects from the head element (1) at the level of the eye-nose region and is in pneumatic pressure connection with the environment.

## Revendications

1. Dispositif pour le fonctionnement et la vérification d'aides à la respiration, fonctionnant avec de l'air comprimé, facilitant ou permettant la respiration, telles que des appareils de protection de respiration, avec une partie de tête, simulant les ouvertures de respiration de l'utilisateur de l'appareil, qui présente une ouverture (9), à laquelle un raccord de respiration (6) de l'aide à la respiration peut être raccordé de manière étanche par rapport à l'environnement, la partie de tête (1) comportant un raccord d'essai (5), qui est en liaison d'écoulement entre une unité d'essai (4) commandable activement et variable passivement en ce qui concerne la production de pression et la variation de volume, et l'ouverture (9), caractérisé en ce qu'une soupape (11, 13) interrompant la liaison d'écoulement entre l'unité d'essai (4) et l'aide à la respiration à vérifier, est placée sur le raccord d'essai (5), à proximité d'écoulement de l'ouverture (9) logeant le raccord de respiration (6).

2. Dispositif selon la revendication 1, caractérisé en ce que l'ouverture (9), logeant le raccord de respiration (6), de la partie de tête (1), est en liaison avec le raccord d'essai (5) tubulaire, formant à son extrémité de tube un siège étanche (11) pour le clapet de soupape (13), par un canal de guidage d'air (10), qui, partant de l'ouverture (9), est placé en anneau autour du siège d'étanchéité (11), une section transversale d'ouverture aussi grande que possible étant rendue possible pour la soupape (11, 13), en formant un volume d'écoulement réduit.

3. Dispositif selon l'une des revendications 1 ou 2, caractérisé en ce que le raccord d'essai (5) tubulaire présente une tête de soupape (13), placée au-dessus du siège de soupape (11), qui porte un dispositif de fermeture (15, 16), sur lequel, par l'intermédiaire d'un poussoir (14), la tête de soupape (13) est placée axialement mobile au-dessus du siège de soupape (11), et en ce que l'ouverture (9) est placée radialement par rapport au raccord d'essai (5) tubulaire, à hauteur du siège de soupape (11) et forme ainsi un espace mort minime, lorsque la soupape (11, 13) est fermée.

4. Dispositif selon la revendication 3, caractérisé en ce que le dispositif de fermeture est une unité à cylindre et piston (15, 16), actionnable pneumatiquement, et le poussoir de piston (14) est fixé sur la tête de soupape (13).

5. Dispositif selon l'une des revendications 1 à 4, caractérisé en ce que la partie de tête (1) est formée au moins dans la zone des ouvertures de respiration (9) dans une enveloppe élastique, rigidement flexible.

6. Dispositif selon l'une des revendications 1 à 5, caractérisé en ce qu'un capteur de pression est raccordé à un anneau creux (22) entourant le pourtour de l'ouverture (9) logeant le raccord de respiration (6), lequel anneau est en liaison de pression, par au moins un perçage (23), avec l'ouverture de respiration (9), qui est dans une position éloignée par rapport au capteur de pression.

7. Dispositif selon l'une des revendications 1 à 6, caractérisé en ce qu'un capteur de pression est raccordé à un raccord de mesure (26), qui ressort de la partie de tête (1), à hauteur de la région des yeux et du nez et est en liaison de pression pneumatique avec l'environnement.
